# EUROPÄISCHE PATENTANMELDUNG

(11) **EP 1 898 505 A1**
(43) Veröffentlichungstag der Anmeldung: **12.03.2008**
(21) Anmeldenummer: 07017085.7
(22) Anmeldetag: 31.08.2007
(51) Int. Cl.: H02B 1/56

(54) **Schaltschrank für eine Hoch-, Mittel- oder Niederspannungsschaltanlage**

(30) Priorität: 06.09.2006 DE 202006013674 U
(71) Anmelder: ABB PATENT GmbH, 68526 Ladenburg (DE)
(72) Erfinder: Kraft, Klaus, 69123 Heidelberg (DE); Merkel, Hans-Peter, Dipl.-Ing., 69198 Schriesheim (DE)
(74) Vertreter: Partner, Lothar

(57) **Zusammenfassung**

Die Erfindung betrifft einen Hoch-, Mittel- oder Niederspannungsschaltschrank, mit im Inneren angeordneten elektrischen Leitern, die im Betrieb stromdurchflossen sind und sich dabei erwärmen. Den elektrischen Leitern (14, 15, 16) sind Heat-Pipes (Wärmerohre, 17) zugeordnet, deren Verdampferabschnitt (18) mit dem jeweiligen Leiter (14) die Wärme gut leitend verbunden ist und deren Kondensatorabschnitt (19) sich außerhalb des Schaltschrankes (10) befinden, wobei sich zwischen dem Kondensatorbereich und dem Verdampferbereich ein insbesondere flexibles Rohr (21) aus isolierendem Material zum Transport des verdampften Fluids vom Verdampferabschnitt (18) zum Kondensatorabschnitt (19) und des kondensierten Fluids von dort wieder zurück zum Verdampferbereich (18) vorgesehen ist.

## Beschreibung

Die Erfindung betrifft einen Schaltschrank für eine Hoch-, Mittel- oder Niederspannungsschaltanlage nach dem Oberbegriff des Anspruches 1.

Insbesondere im Bereich der Anschlussstellen von Leistungsschaltern an das im Schaltschrank befindliche Sammelschienensystem treten aufgrund der Stromwirkung erhöhte Temperaturen auf, weswegen manche Niederspannungsleistungsschalter nicht mit ihrem Nennstrom beziehungsweise Nennschaltleistung innerhalb des Schaltschrankes betrieben werden können. In manchen Fällen werden die Leistungsschalter lediglich durch Wärmeleitung über ihre Anschlussstellen gekühlt; in manchen Fällen ist es erforderlich, Kühlkörper vorzusehen, die einen größeren Teil der Wärme abführen können. Dadurch können auch eine gewisse Betriebsstrom- und Temperaturerweiterung erreicht werden.

Da sich die Wärme erzeugenden Bauteile und gegebenenfalls auch die Kühlkörper innerhalb des Schaltschrankes befinden und damit dessen gesamte Atmosphäre erwärmen, wobei die Wärme im Schaltschrank verbleibt und durch Konvektion lediglich im Inneren des Schaltschrankes abtransportiert bzw. in Zirkulation gebracht wird, erfolgt die Hauptkühlung über die Schaltschrankwände. Auch ist die Ausgestaltung von Kühlkörpern kompliziert und platzaufwendig.

Da ein großer Teil der Wärme im Schaltschrank verbleibt, ist auch eine Reduzierung der zulässigen Schaltleistung des Leistungsschalters unter seine Nennschaltleistung oft nicht zu vermeiden.

Zu berücksichtigen nämlich ist, dass die Prüfung des Leistungsschalters in einem Prüflabor erfolgt, wodurch der Leistungsschalter ausreichend gekühlt ist, weil die Wärme hier leicht abgeführt wird. Im Schaltschrank wird der Leistungsschalter aber oft unter Bedingungen betrieben, die nicht den Prüfbedingungen entsprechen, so dass eine Reduzierung der Nennschaltleistung oder der Nennleistung im Schaltschrank erforderlich werden kann.

Aufgabe der Erfindung ist es, die Wärmeabführung aus einem solchen Schaltschrank heraus zu verbessern, so dass der Leistungsschalter bei Nennschaltleistung oder Nennstrom betrieben werden kann.

Diese Aufgabe wird erfindungsgemäß gelöst durch die Merkmale des Anspruches 1.

Die Erfindung besteht damit darin, dass dem wenigstens einem elektrischen Bauteil wenigstens eine Heat-Pipe zugeordnet ist, deren Verdampferabschnitt mit dem jeweiligen Bauteil die Wärme gut leitend verbunden ist und deren Kondensationsabschnitt sich außerhalb des Schaltschrankes befindet, wobei zwischen dem Kondensatorbereich und dem Verdampferbereich ein insbesondere flexibles Rohr aus isolierendem Material zum Transport des verdampften Fluids vom Verdampferabschnitt zum Kondensationsabschnitt und des kondensierten Fluids von dort wieder zurück zum Verdampferabschnitt vorgesehen ist.

An den Anschlusskontaktstücken der Leistungsschalter schließen Kontaktstücke an, die über aus Kupfer hergestellte Leiter zum Beispiel mit Sammelschienen verbunden sind. Diese aus Kupfer bestehenden Leiter können sich nach oben oder unten erstrecken und sind innerhalb des Schaltschrankes in entsprechender Weise zu bemessen.

Diesen Leitern und gegebenenfalls auch den Anschlusskontaktstücken des Leistungsschalters, an denen die Leiter anschließen, sind die Heat-Pipes zugeordnet.

Eine vorteilhafte Ausgestaltung der Erfindung kann dahin gehen, dass der Verdampferabschnitt räumlich unterhalb des Kondensationsabschnittes angeordnet ist, so dass der Transport des kondensierten Fluids aufgrund der Schwerkraft zum Verdampferabschnitt zurückfließt.

Es besteht natürlich die Möglichkeit, Heat-Pipes auch an anderen Stellen anzuschließen; allgemein kann gesagt werden, dass Heat-Pipes überall dort angeschlossen werden können, wo hohe Temperaturen zu erwarten sind, die die Temperatur der Innenatmosphäre des Schaltschrankes beeinflussen.

Damit kann auf einfache Weise die an den Anschlussstellen oder überhaupt an kritischen Stellen des Schaltschrankes erzeugte Abwärme aus dem Schaltschrank herausbefördert werden.

Als Fluid wird sinnvoller Weise eine niedrigsiedende Flüssigkeit verwendet.

Heat-Pipes, die auch als Wärmerohre bezeichnet werden, sind an sich sind bekannt. Sie besitzen einen metallischen Außenkörper, innerhalb dem eine Innenschicht aus Sintermaterial oder dergleichen vorgesehen ist, mit denen das Fluid von dem Kondensationsbereich zum Verdampferteil, die auch als Kondensatorseite bzw. Verdampferseite bezeichnet werden können, zurücktransportiert wird. Derartige Heat-Pipes sind nicht ohne weiteres verwendbar, weil sie aus Metall, d. h. elektrisch leitendem Material gebildet sind. Für die Anwendung in Schaltschränken ist es erforderlich, dass zwischen dem Verdampferteil und dem Kondensationsbereich ein Isoliermaterialbereich vorhanden ist, der entweder aus starrem oder aus flexiblem Rohrmaterial gebildet ist.

Bei der Anordnung, den Verdampferabschnitt vertikal unterhalb des Kondensationsabschrlittes vorzusehen, ist eine solche Innenschicht nicht erforderlich, wodurch das Wärmerohr vereinfacht ist.

Bei Ausgestaltung der Bauteile als Doppelleiter kann der Verdampferabschnitt zwischen den Leitern untergebracht werden.

Weitere vorteilhafte Ausgestaltungen und Verbesserungen sind den weiteren Unteransprüchen zu entnehmen.

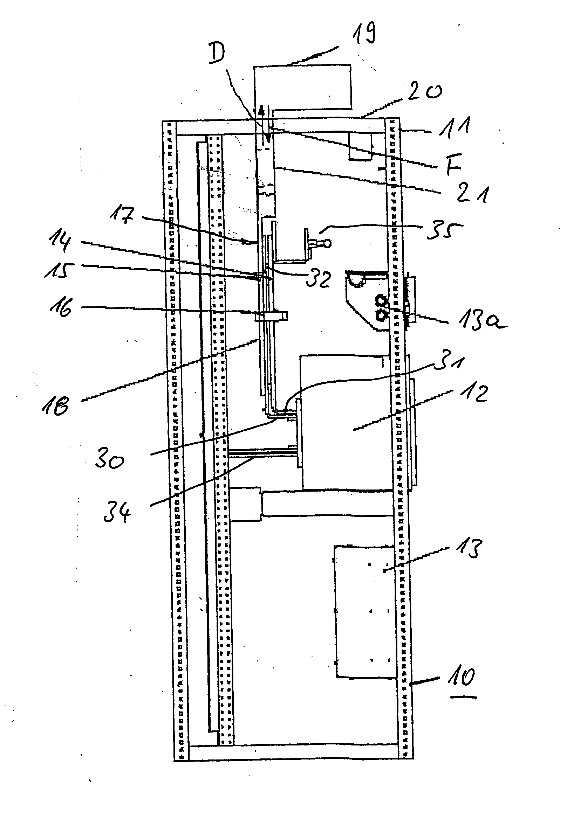

Anhand der Zeichnung, in der ein Ausführungsbeispiel der Erfindung dargestellt ist, sollen die Erfindung sowie weitere vorteilhafte Ausgestaltungen und Verbesserungen der Erfindung und weitere Vorteile näher erläutert und beschrieben werden.

Es zeigt
- Die einzige Fig.: einen Schaltschrank in schematischer Darstellung.

Ein elektrischer Schaltschrank 10 ist aus einem Rahmengestell 11 aufgebaut, an dem nicht näher bezeichnete Abschlusswände befestigt sind. Innerhalb des Schaltschrankes 10 befinden sich ein Leistungsschalter 12 und ein durch zwei Kästen angedeutetes Steuer- und Regelteil 13, 13a, von denen der Leistungsschalter 12 mittels Verbindungsleitern 34 mit nicht näher dargestellten Sammelschienen verbunden ist, wobei die Verbindungsleiter 34 an im unteren Bereich des Leistungsschalters 12 in diesem befindlichen Zugangskontaktstellen angeschlossen sind.

Die im oberen Bereich des Leistungsschalters befindlichen Kontaktstellen, die als Abgangskontaktstellen bezeichnet werden, sind mit Anschlusskontaktstücken 30, 31 verbunden, die in die im Leistungsschalter 12 befindlichen Kontaktstellen eingesteckt werden. An diesen Anschlusskontaktstücken 30, 31, die gegebenenfalls auch L-förmig ausgebildet sein können, sind Leiter 14, 15 angeschlossen, die sich von den Anschlusskontaktstücken 30, 31 parallel nach oben erstrecken und von einem Stromwandler 16 umgeben sind; zwischen den beiden Leitern 14, 15 befinden sich Abstandshalter 32, 33, mit denen der korrekte Abstand der Leiter 14, 15 gewährleistet ist. Diese beiden Leiter sind also Doppelleiter, die im oberen Bereich, das heißt an ihren in der Zeichnung oben befindlichen Enden, mit schematisch angedeuteten Abgängen 35 zum Beispiel zur Erdung verbunden sind.

Da der Leistungsschalter dreiphasig oder zusätzlich mit einem Neutralleiter ausgebildet ist, sind auch jeweils drei oder vier Leiter oder Doppelleiter 14, 15 vorhanden, für jede Phase natürlich je ein Leiter 14 und 15 bzw. ein Doppellleiter 14, 15.

Jedem Leiter 14 und 15 ist ein sogenanntes Heat-Pipe 17 oder Wärmerohr 17 zugeordnet, welches einen Verdampferteil oder - abschnitt 18 und einen Kondensationsabschnitt oder - bereich 19 aufweist. Der Kondensationsabschnitt 19 befindet sich außerhalb des Schaltschrankes 10 auf dessen Dach 20. Im Verdampferteil 18 befindet sich eine niedrig siedende Flüssigkeit, die dort aufgrund der Stromwärme des Doppelleiters 14, 15 verdampft; der Dampfstrom D steigt zum Kondensationsbereich 19 auf, wird dort kondensiert und fließt aufgrund der Schwerkraft gemäß Pfeilrichtung F wieder in den Verdampferteil 18 zurück.

Der Verdampferteil 18 ist aus einem die Wärme gut leitendem Material und damit aus einem Metall hergestellt, was auch für den Kondensationsabschnitt 19 gilt. Der Verdampferteil 18 liegt über eine längere Strecke an dem Leiter 14 des Doppelleiters 14, 15 in gutem Wärmekontakt an, so dass eine gute Wärmeleitung von dort und vom Leitungsschalter 12 zum Verdampferteil 18 erzielt wird. Der Bereich 21 zwischen dem Verdampferteil 18 und dem Kondensationsabschnitt 19 ist als Rohrstück aus isolierendem Material hergestellt, so dass eine Herausführung von elektrischem Strom von dem Doppelleiter 14, 15 nach außen verhindert ist. Selbstverständlich ist auch das innerhalb der Heat-Pipe befindliche Fluid ein elektrisch nicht leitendes Fluid.

Da die Leiter 14 und 15 aus Flachbandmaterial bestehen, ist die Berührungsfläche des Verdampferteils 18 eben ausgebildet, so dass dort ein guter Wärmeübergang vom Leiter 14 in den Verdampferteil 18 gegeben ist. Gegebenenfalls kann ein geeignetes Lot-oder Wärmekontaktmaterial zwischen dem Leiter 14 und dem Verdampferteil 18 vorgesehen sein.

In der Ausführungsform gemäß der einzigen Figur ist die Heat-Pipe 17 etwa L-förmig wobei der eine Schenkel der L-Form gegen den Leiter 14 zum Anliegen kommt. Ähnliche Heat-Pipes können natürlich auch für die Leiter 34 vorgesehen sein.

Das Wärmerohr 17 ist dargestellt in Anwendung zur Kühlung von Leitern, die mit dem Leistungsschalter 12 in Verbindung stehen. Darüber hinaus kann ein solches Wärmerohr überall dort angeschlossen werden, wo hohe Wärmemengen entstehen, die nicht ohne weiteres durch Konvektion abgeführt werden können, insbesondere bei elektrischen Geräten, in denen durch Stromfluss Wärme entsteht, die abgeführt werden muss.

Es besteht natürlich auch die Möglichkeit, dass der Verdampferteil 18 des Wärmerohrs 17 zwischen die Leiter 14, 15 des Doppelleiters 14, 15 eingesetzt wird, so dass eine besonders optimale Wärmeabführung nach außen erfolgt.

Dadurch wird erreicht, das die innerhalb des Schaltschrankes entstehende Wärme, die ohne weitere Maßnahmen wie die erfindungsgemäßen Wärmerohre mit ihrer Nennleistung bzw. Nennschaltleistung betrieben werden können, tatsächlich ihre Nennschaltleistung bringen.

In der Zeichnung ist dargestellt, dass sich die Leiter 14, 15 nach oben erstrecken; es besteht natürlich auch die Möglichkeit, dass die Leiter 14, 15 nach unten vorspringen. Auf die Lage der Leiter kommt es daher nicht an.

## Patentansprüche

1. Hoch-, Mittel- oder Niederspannungsschaltschrank, mit wenigstens einem im Inneren angeordneten, elektrischen stromführenden Bauteil, die sich im Betrieb erwärmen, **dadurch gekennzeichnet, dass** wenigstens einem der elektrischen Bauteile (14, 15) wenigstens eine Heat-Pipe (Wärmerohr, 17) zugeordnet ist, deren Verdampferabschnitt (18) mit dem jeweiligen Bauteil (14) die Wärme gut leitend verbunden ist und deren Kondensationsabschnitt (19) sich außerhalb des Schaltschrankes (10) befindet, wobei sich zwischen dem Konden-satorbereich und dem Verdampferbereich ein insbesondere flexibles Rohr (21) aus isolierendem Material zum Transport des verdampften Fluids vom Verdampferabschnitt (18) zum Kondensationsabschnitt (19) und des kondensierten Fluids von dort wieder zurück zum Verdampferabschnitt (18) vorgesehen ist.

2. Schaltschrank nach Anspruch 1, **dadurch gekennzeichnet, dass** der Verdampferabschnitt (18) räumlich unterhalb des Kondensationsabschnittes (19) angeordnet ist, so dass der Transport des kondensierten Fluids aufgrund der Schwerkraft zum Verdampferabschnitt (18) zurückfließt.

3. Schaltschrank nach einem der Ansprüche 1 und 2, mit einem Leistungsschalter (12), **dadurch gekennzeichnet, dass** das Wärmerohr (17) mit seinem Verdampferabschnitt (18) dem Leistungsschalter (12) zugeordnet ist.

4. Schaltschrank nach Anspruch 1 oder 2, **dadurch gekennzeichnet, dass** die Bauteile elektrische Leiter (14, 15) sind, die an den Anschlusskontaktstellen des Leistungsschalters (12) angeschlossen sind.

5. Schaltschrank nach Anspruch 4, **dadurch gekennzeichnet, dass** bei Ausgestaltung der elektrischen Leiter (14, 15) als Doppelleiter mit zwei parallel zueinander verlaufenden Leitern (14, 15) sich der Verdampferabschnitt (18) zwischen den Doppelleitern (14, 15) befindet.
